Europäisches Patentamt

European Patent Office

Office européen des brevets

(11) Veröffentlichungsnummer : **0 084 886**
**B1**

(12) **EUROPÄISCHE PATENTSCHRIFT**

(45) Veröffentlichungstag der Patentschrift :
**21.11.85**

(51) Int. Cl.⁴ : **E 21 B 43/22, E 21 B 43/24**

(21) Anmeldenummer : **83100637.4**

(22) Anmeldetag : **25.01.83**

(54) Verfahren zur Steigerung der Ausbeute an Kohlenwasserstoffen aus einer unterirdischen Formation.

(30) Priorität : **27.01.82 DE 3202492**

(43) Veröffentlichungstag der Anmeldung :
**03.08.83 Patentblatt 83/31**

(45) Bekanntmachung des Hinweises auf die Patenterteilung : **21.11.85 Patentblatt 85/47**

(84) Benannte Vertragsstaaten :
**AT DE FR GB IT NL**

(56) Entgegenhaltungen :
**US-A- 3 802 508**
**US-A- 4 050 513**
**US-A- 4 175 618**

(73) Patentinhaber : **VEBA OEL Entwicklungs-Gesellschaft mbH**
**Alexander-von-Humboldt-Strasse**
**D-4650 Gelsenkirchen 2 (DE)**

(72) Erfinder : **Littmann, Wolfgang, Dr.**
**Bleichenstrasse 32**
**D-3050 Wunstorf (Steinhude) (DE)**

(74) Vertreter : **Krug, Joachim, Dr.**
**Alexander-von-Humboldt-Strasse**
**D-4650 Gelsenkirchen-Hassel (DE)**

EP 0 084 886 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

In vielen erdölführenden unterirdischen Formationen steht das Erdöl unter einem Druck, der das Erdöl aus der Formation zu einem Produktionsbohrloch treibt, aus dem es zur Erdoberfläche gefördert werden kann. Diese allgemein als Primärförderphase bezeichnete Erdölgewinnung führt bei Schweröllagerstätten jedoch, wenn überhaupt, nur zur Förderung eines sehr geringen Teiles des Öles. Dies ist darauf zurückzuführen, daß Schweröle wegen ihrer hohen Viskosität unter den initialen Lagerstättenbedingungen kaum oder gar nicht fließfähig sind. Man führt daher derartigen Lagerstätten Wärme zu, was zu einer Verringerung der Viskosität des Öles führt, wodurch dieses fließfähig wird.

Die Wärmezufuhr in die Lagerstätte erfolgt gewöhnlich durch die Injektion von heißem Wasser oder Wasserdampf in ein Injektionsbohrloch, das sich in geeigneter Entfernung von dem oder den Produktionsbohrlöchern befindet. Das injizierte Wasser bzw. der injizierte Wasserdampf dient neben der Erwärmung der Lagerstätte gleichzeitig als Verdrängungsmittel für das durch die Wärmezufuhr beweglich gewordene Öl. Zwar läßt sich hierdurch die Ausbeute einer Schweröllagerstätte erheblich steigern bzw. überhaupt erst ermöglichen, doch liegt sie noch weit unter den Ausbeuten, die in Mittel- und Leichtöllagerstätten erreicht werden. Ein Grund hierfür liegt in den gegenüber Schweröl wesentlich geringeren Viskositäten der verdrängenden Medien Heißwasser oder Wasserdampf, wodurch das Schweröl nur unvollständig verdrängt wird. Weiterhin kommt es aufgrund von Dichteunterschieden beim Dampffluten dazu, daß sich der Dampf im oberen Teil einer Lagerstätte konzentriert, dort schnell zu den Fördersonden durchbricht, so daß es nicht möglich ist, in der Lagerstätte einen zur Verdrängung des Öles ausreichenden Druckgradienten aufzubauen.

Ähnliche Probleme sind in US-PS 3 477 510 für die Gewinnung von viskosen Ölen beschrieben und als Maßnahme wird das alternierende Einbringen von Dampf und Wasser in ein Injektionsbohrloch vorgeschlagen. Durch eine erste Dampfinjektion wird naturgemäß der obere Teil der Formation erhitzt, bei dem nachfolgenden Einführen von Wasser der untere Teil der Formation. Eine zweite Dampfinjektion führt schließlich zu einer etwa vertikalen Lage der Isotherme. Wegen der gegenüber Erdöl sehr geringen Viskosität des Wassers wird jedoch hierbei Schweröl nur unvollständig verdrängt. Dies gilt auch für das Verfahren nach DE-AS 26 02 450, bei dem die Ausbeute von Erdöl-Lagerstätten, insbesondere von hochviskosem Erdöl, dadurch verbessert werden soll, daß die Lagerstätte zunächst durch Heißwasserfluten auf eine Temperatur aufgewärmt wird, bei der sich stabile Emulsionen aus dem Erdöl und einer alkalischen Lösung bilden, dann diese alkalische Lösung heiß injiziert und schließlich zur Förderung mit Kaltwasser geflutet wird.

Andererseits ist es bekannt, daß der Verdrängungswirkungsgrad bei der Erdölgewinnung durch Fluten wesentlich gesteigert werden kann, wenn dem Flutwasser geringe Mengen von hydrophilen Polymerisaten zugesetzt werden, die die Viskosität der Lösung erhöhen. Geeignete Polymerisate sind z. B. Polysaccharide, Hydroxyäthylzellulosen und insbesondere nicht oder nur teilweise hydrolysierte Polyacrylamide. Da aber diese Chemikalien im allgemeinen temperaturempfindlich sind, sind sie für die Gewinnung von Schweröl beim Heißwasserfluten nicht ohne weiteres verwendbar. Nach US-PS 3 373 814 werden sie zwar vor oder während der Injektion von Dampf in ein Bohrloch eingesetzt, sollen jedoch zusammen mit einem ihre Wasseraufnahme und ihr Schwellen verzögernden Mittel, wie Alkali- oder Erdalkalihalogeniden, und zusammen mit wasser- und ölunlöslichen feinteiligen Stoffen, wie Kalk, Bimsstein, Schwerspat, verwendet werden, um unerwünschte Dampfdurchbrüche dadurch zu verhindern, daß die Formation an den gefährdeten Stellen verstopft wird.

Es wurde nun gefunden, daß die geschilderten Schwierigkeiten dadurch überwunden und die Ausbeute an Kohlenwasserstoffen aus einer unterirdischen, insbesondere Schweröl, Bitumen oder Teer führenden Formation dadurch gesteigert werden kann, daß man die Formation zunächst erhitzt und dann mit einer kalten wäßrigen Lösung flutet, die einen Zusatz von ihre Viskosität erhöhenden Polymerisaten enthält.

Das Erhitzen der Formation kann auf verschiedene Weisen erfolgen, z. B. dadurch, daß ein Teil des Schweröles unter Zuführung von Sauerstoff oder Luft verbrannt wird. Auch ist es möglich, die Formation elektrothermisch zu erwärmen. US-PS 3 958 636 beschreibt eine elektrothermische Erhitzung der Formation, wobei während und nach der Erhitzung eine wäßrige Lösung insbesondere von stark dissoziierten anorganischen Salzen in die Formation gedrückt wird, die Lösung sich also mit der Formation aufheizt. Auch nach US-PS 4 084 637 wird die Formation elektrothermisch aufgeheizt und anschließend mit Heißwasser, Dampf, Heißgas oder einem Lösungsmittel für das Schweröl geflutet.

Bevorzugt wird jedoch die eingangs erwähnte Erhitzung der Formation mittels injiziertem Wasserdampf oder Heißwasser. Dabei sollte die Formation Temperaturen zwischen 50 und 350 °C annehmen. Bevorzugt werden Temperaturen zwischen 100 und 250 °C, wobei in der Regel die Temperatur der Formation am Injektionsbohrloch höher ist als am Produktionsbohrloch.

Als viskositätserhöhende Polymerisate können Hydroxyäthylzellulose oder Polysaccharide verwendet werden. Bevorzugt wird der Einsatz von Polyacrylamiden, die nicht oder partiell hydrolysiert sind. Auch ist es möglich, den Lösungen neben den Polymerisaten Tenside zuzusetzen, z. B. Alkalisalze von sulfatierten alkoxylierten Alkyl-, Aryl- oder Alkylaryl-hydroxyverbindungen.

Die Mengen an Polymerisat werden so bemessen, daß die Viskosität der Lösung bei der während der Verdrängung des Schweröls erreichten Temperatur mindestens die Viskosität des zu verdrängenden Schweröles bei dieser Temperatur erreicht. Im allgemeinen sind dies 0,5 bis 30, vorzugsweise 1 bis 6 kgm$^{-3}$. Die Polymerisatlösung wird mit einer solchen Temperatur geflutet, daß ihre Temperatur in der Formation nicht so stark ansteigt, daß die Polymerisate ihre viskositätssteigernde Wirkung verlieren. Bei den bevorzugt eingesetzten nicht oder teilweise hydrolysierten Polyacrylamiden liegt diese Temperaturgrenze bei 110 bis 130 °C. Um die Überschreitung dieser Temperatur zu vermeiden, sollte die Polymerenlösung mit Temperaturen zwischen 5 und 50, vorzugsweise 15 und 30 °C zum Nachfluten eingesetzt werden.

Das erfindungsgemäße Verfahren ist nicht nur bei Schweröllagerstätten anwendbar; es ist auch für andere, ähnliche Lagerstätten, speziell Bitumenlagerstätten und Teersande brauchbar und kann auch in Leicht- und Mittelöllagerstätten eingesetzt werden.

Beispiel

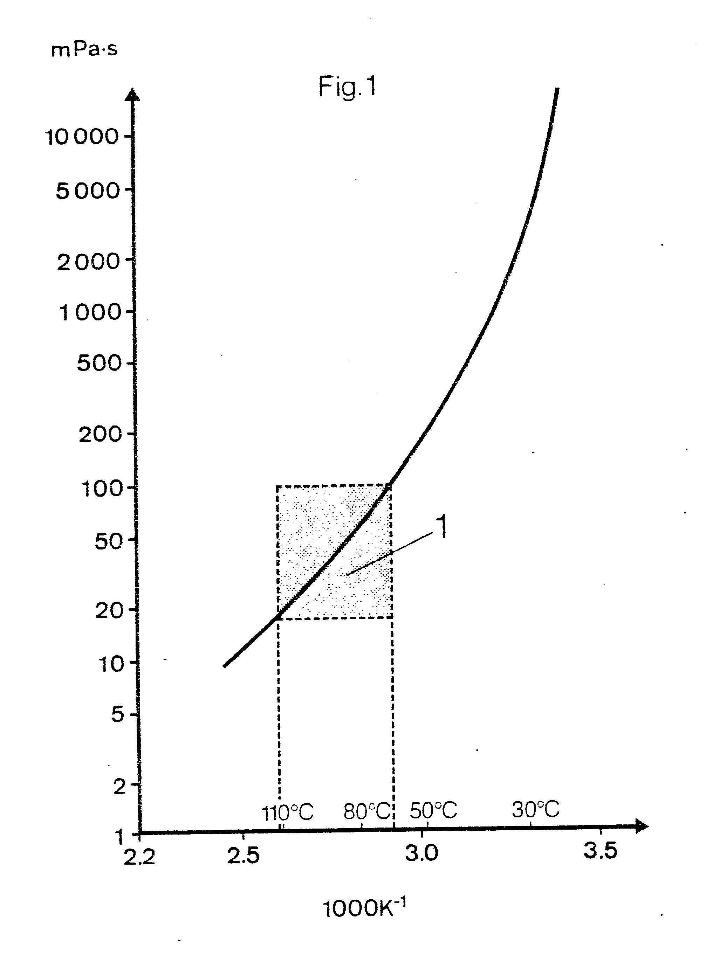

Aus einer Lagerstätte mit einer Mächtigkeit von 8,5 m, einer Permeabilität von 1,5 μm$^2$ und einer Porosität von 30 % war ein Schweröl zu fördern, dessen Viskosität bei der Lagerstättentemperatur von 23 °C 1 600 mPa.s betrug. In Fig. 1 ist die Viskosität dieses Öles in mPa.s gegen die reziproke absolute Temperatur aufgetragen. Mit 1 ist der Bereich mit Viskositäten zwischen 15 und 100 mPa.s gekennzeichnet, der bei reziproken Temperaturen zwischen 0,002 9 und 0,002 6 K$^{-1}$ entsprechend 70 bis 110 °C liegt, in dem also nicht oder teilweise hydrolysierte Polyacrylamide ausreichend beständig sind und die Mobilität des Schweröles seine Förderung ermöglicht.

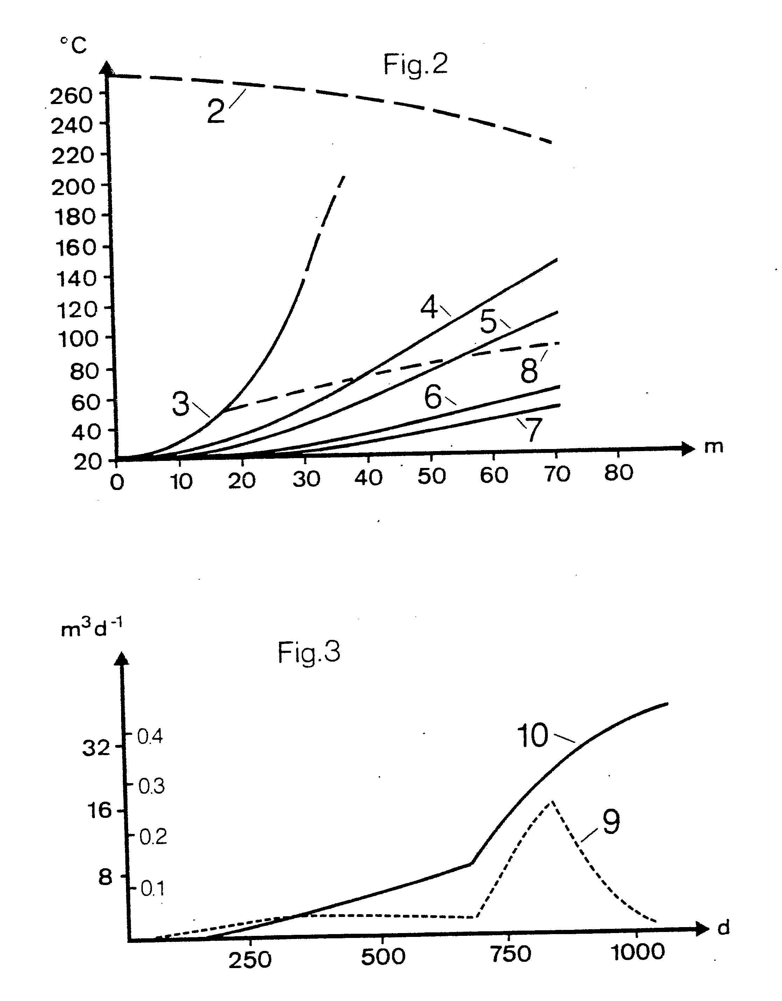

In ein Injektionsbohrloch, das von 4 Produktionsbohrlöchern im Abstand von jeweils 70 m umgeben war, wurden 5 m$^3$h$^{-1}$ Heißwasser mit einer Temperatur von 270 °C und einem Druck von 54 bar geflutet. Nach 500 Tagen hatte sich der in der Kurve 2 in Fig. 2 als Funktion des Abstandes vom Injektionsbohrloch dargestellte Temperaturverlauf eingestellt.

Anschließend wurde mit 5 m$^3$h$^{-1}$ einer 1,5 kgm$^{-3}$ Polymerisat enthaltenden Lösung gespült. Als Polymerlösung wurde partiell hydrolysiertes Polyacrylamid in Süßwasser verwendet. Die Lösung hatte eine Temperatur von 20 °C. In Fig. 2 ist der Temperaturverlauf in der Lagerstätte nach 10 Tagen als Kurve 3, nach 50 Tagen als Kurve 4, nach 100 Tagen als Kurve 5, nach 500 Tagen als Kurve 6 und nach 1 000 Tagen als Kurve 7 dargestellt. Kurve 8 zeigt den Temperaturverlauf an der das Polymerisat enthaltenden Kaltwasserfront. Die höchste Temperatur wurde mit 90 °C nach ca. 150 Tagen erreicht. Sie lag noch deutlich unter den Temperaturen, bei welchen ein merklicher Abbau des Polymerisats zu befürchten ist.

In Fig. 3 ist als Kurve 9 die Produktionsrate in m$^3$d$^{-1}$ (linke Einteilung der Ordinate) und als Kurve 10 der Entölungsgrad der Formation (rechte Einteilung der Ordinate) gegen die Produktionszeit in Tagen dargestellt. Die Produktionsrate erreichte während des Heißwasserflutens nicht 1 m$^3$d$^{-1}$ und steigerte sich beim Erreichen der Produktionslöcher durch die Polymerenfront auf ca. 16 m$^3$d$^{-1}$. Während allein mit Heißfluten der Entölungsgrad 15 % nicht erreichte, führte das nachfolgende Fluten mit kalter Polymerenlösung zu einem Entölungsgrad von mehr als 40 %.

**Patentansprüche**

1. Verfahren zur Steigerung der Ausbeute an Kohlenwasserstoffen aus einer unterirdischen, insbesondere schweröl-, bitumen- oder teerführenden Formation, bei dem die Formation zunächst erhitzt und anschließend mit einer kalten wäßrigen Lösung geflutet wird, dadurch gekennzeichnet, daß die Formation nach dem Erhitzen mit einer einen ihre Viskosität erhöhenden Polymerisatzusatz enthaltenden kalten wäßrigen Lösung geflutet wird.

2. Verfahren nach Anspruch 1, dadurch gekennzeichnet, daß die Formation mittels Heißwasser oder Wasserdampf erhitzt wird.

3. Verfahren nach Anspruch 1 oder 2, dadurch gekennzeichnet, daß die Formation auf Temperaturen zwischen 50 °C und 350 °C, vorzugsweise zwischen 100 °C und 250 °C, erhitzt wird.

4. Verfahren nach einem der Ansprüche 1 bis 3, dadurch gekennzeichnet, daß als viskositätserhöhendes Polymerisat Polysaccharide, Hydroxyäthylzellulose oder insbesondere nicht oder partiell hydrolysierte Polyacrylamide verwendet werden.

5. Verfahren nach einem der Ansprüche 1 bis 4, dadurch gekennzeichnet, daß die wäßrige Lösung Polymerisate in Mengen von 0,5 kgm$^{-3}$ bis 30 kgm$^{-3}$, vorzugsweise von 1 kgm$^{-3}$ bis 6 kgm$^{-3}$, enthält.

6. Verfahren nach einem der Ansprüche 1 bis 5, dadurch gekennzeichnet, daß die wäßrige Lösung mit Temperaturen zwischen 5 °C und 50 °C, insbesondere zwischen 15 °C und 30 °C, zum Fluten eingesetzt wird.

**Claims**

1. Process for increasing the yield of hydrocarbons from an underground formation bearing in particular heavy oil, bitumen or tar, in which the formation is first heated and subsequently flooded with a cold aqueous solution, characterised in that, after heating, the formation is flooded with a cold aqueous solution containing a polymer additive increasing its viscosity.

2. Process according to Claim 1, characterised in that the formation is heated by means of hot water or steam.

3. Process according to Claim 1 or 2, characterised in that the formation is heated to temperatures of between 50 °C and 350 °C, preferably between 100 °C and 250 °C.

4. Process according to one of Claims 1 to 3, characterised in that polysaccharides, hydroxyethylcellulose or, in particular, non-hydrolysed or partially hydrolysed polyacrylamides are used as the viscosity-increasing polymer.

5. Process according to one of Claims 1 to 4, characterised in that the aqueous solution contains polymers in quantities of 0.5 kgm$^{-3}$ to 30 kgm$^{-3}$, preferably 1 kgm$^{-3}$ to 6 kgm$^{-3}$.

6. Process according to one of Claims 1 to 5, characterised in that the aqueous solution is used for flooding at temperatures of between 5 °C and 50 °C, especially between 15 °C and 30 °C.

**Revendications**

1. Procédé pour augmenter le rendement en hydrocarbures d'une formation souterraine, en particulier productrice d'huiles lourdes, de bitumes ou de goudrons, dans lequel la formation est d'abord réchauffée et ensuite noyée avec une solution aqueuse froide, caractérisé par le fait que, après le réchauffement, la formation est noyée avec une solution aqueuse froide contenant une addition de produits polymérisés augmentant la viscosité de cette solution.

2. Procédé selon la revendication 1, caractérisé par le fait que la formation est réchauffée au moyen d'eau chaude ou de vapeur d'eau.

3. Procédé selon la revendication 1 ou la revendication 2, caractérisé par le fait que la formation est réchauffée à des températures comprises entre 50 °C et 350 °C, préférablement entre 100 °C et 250 °C.

4. Procédé selon l'une des revendications 1 à 3, caractérisé par le fait que l'on utilise, en tant que produit polymérisé augmentant la viscosité, des polysaccharides, de l'hydroxy-éthyl-cellulose, ou en particulier, des polyacrylamides non hydrolysés, ou partiellement hydrolysés.

5. Procédé selon l'une des revendications 1 à 4, caractérisé par le fait que la solution aqueuse contient des produits polymérisés en quantités comprises entre 0,5 kgm$^{-3}$ et 30 kgm$^{-3}$, préférablement entre 1 kgm$^{-3}$ et 6 kgm$^{-3}$.

6. Procédé selon l'une des revendications 1 à 5, caractérisé par le fait que l'on applique, pour noyer le gisement, la solution aqueuse à des températures comprises entre 5 °C et 50 °C, préférablement entre 15 °C et 30 °C.

Fig.1

Fig.2

Fig.3